# EUROPEAN PATENT SPECIFICATION

(11) **EP 2 548 250 B1**
(45) Date of publication and mention of the grant of the patent: **25.02.2015**
(21) Application number: 11723609.1
(22) Date of filing: 15.03.2011
(51) Int. Cl.: H01M 8/04, H01M 8/06, H01M 16/00

(54) **FUEL CELL ELECTRIC POWER GENERATOR AND MANAGEMENT METHOD THEREOF**
BRENNSTOFFZELLENSTROMGENERATOR UND VERWALTUNGSVERFAHREN DAFÜR
GÉNÉRATEUR D'ÉNERGIE ÉLECTRIQUE À PILE À COMBUSTIBLE ET PROCÉDÉ DE GESTION ASSOCIÉ

(30) Priority: 15.03.2010 IT TO20100192
(43) Date of publication of application: 23.01.2013
(73) Proprietor: Electro Power Systems S.p.A., 10144 Torino (TO) (IT)
(72) Inventor: CHERCHI, Pierpaolo, I-10141 Torino (IT); GIANOLIO, Giuseppe, I-14010 Cellarengo (IT); PULLARA, Cristina, 10153 Torino (IT); BALDINI, Luca, I-10129 Torino (IT); SILVINI, Simone, I-10133 Torino (IT)
(74) Representative: Lunati & Mazzoni S.r.L.
(86) International application number: PCT/IB2011/000544
(87) International publication number: WO 2011/114215

(56) References cited:
- WO-A1-03/041204
- US-A1- 2004 219 407
- US-B1- 6 660 417

## Description

### TECHNICAL FIELD

The present invention relates to a fuel cell electric power generator and to a management method thereof.

### BACKGROUND ART

Fuel cell electric power generators (UPS) for stationary use and having low capacity (5-20 kW) based on the use of PEM-type (Proton Exchange Membrane) fuel cells, in which hydrogen is used as a fuel, are generally designed for back-up applications. In other words, these systems work in a nearly constant state of operative "lethargy" (*stand-by state*) but should be readily activated in a very short time, under safe and reliable conditions, to ensure that the electric power requirements of the load be met in case of emergency.

As the extended and/or frequent use of these generators is not required, at least in principle, installing complex systems for the storage and supply of hydrogen , such as liquid hydrogen evaporation systems, in which hydrogen is stored at cryogenic temperatures, is not cost-effective.

Furthermore, the simplest systems for storage and supply most frequently used in the field, in which hydrogen is taken from sets of highly pressurized gas cylinders, originate safety problems which are often underestimated, and which concern their installation, management and maintenance.

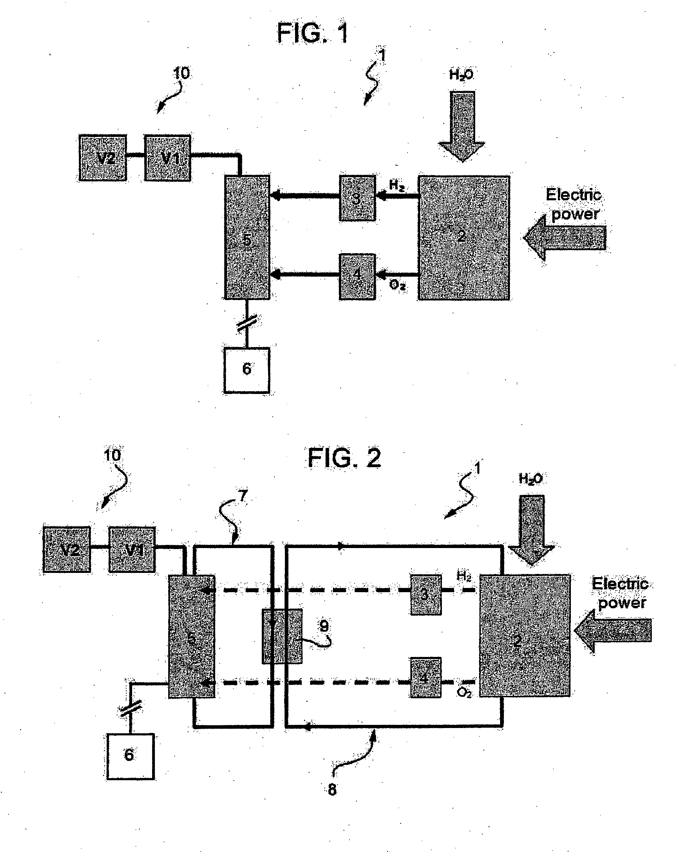

In order to obviate these drawbacks, the operative practice of structurally connecting and functionally coupling the stack of fuel cells of an electric power generator to on-site means for generating gaseous fuel has caught on in the field. In particular, where the cells use hydrogen as a fuel, fuel cell electric power generators comprising an electrolyzer for producing hydrogen are known. A typical configuration of such an electric power generator is shown in Figure 1.

Figure 1 diagrammatically shows a fuel cell electric power generator 1 for stationary use and of low capacity, which comprises an electrolyzer 2 configured to receive electric power and water and to convert the latter into its two components, hydrogen and oxygen. The generator further comprises tanks 3,4 in which the hydrogen and oxygen produced by electrolyzer 2 are stored. Generator 1 comprises a fuel cell stack 5 to which, in use, respective flows of hydrogen and oxygen taken from tanks 3,4 are supplied.

Since the fuel cells stacked to form stack 5 need to work within an optimal temperature range for their correct operation, stack 5 is preferably maintained in use at a substantially constant temperature (generally within a range from 40 to 80°C). For this purpose, generator 1 comprises means 10 for dissipation of the heat produced by the oxidation reaction which takes place in the fuel cells. Typically, these dissipation means 10 consist of one or more appropriately arranged fans V1, V2.

Hence, when the power generator 1 is activated to fulfill the electric requirements of a load 6, generator 1 consumes the hydrogen and oxygen previously stored in tanks 3,4, which may be recharged by electrolyzer 2, e.g. when the power generator 1 is returned to stand-by condition.

There is an optimal operating temperature range for electrolyzer 2, as well, which is from about 40 to about 80°C. However, at start-up, and therefore during the first minutes of operation, electrolyzer 2 is forced to work at ambient temperature, i.e. much below the optimal temperature range. This significantly reduces its efficiency and the hydrogen and oxygen output to the detriment of electric power consumption spent for electrolysis and with an undesirable increase of the time needed to restore the hydrogen and oxygen content in tanks 3,4 in view of a new intervention of generator 1.

Therefore, in the art, there is the need to provide a fuel cell electric power generator, of the type comprising on-site means for generating gaseous fuel, which makes it possible to optimize the operating conditions of said means, especially in the phase of cold start-up thereof.

In the field, there is the further need to provide a fuel cell electric power generator of the type comprising on-site means for generating gas fuel capable of reducing energy wastes and of increasing the overall efficiency of the on-site process of generating reactants and then converting the chemical energy of the reactants themselves into electric power.

For example, US6660417 suggested equipping a fuel cell electric power generator with a device for transferring the heat developed in the fuel cell when generating electric power to the electrolyzer.

More particularly, in US6660417 reference is made to a configuration providing for a first period (of three hours), during which the generator is used to generate the electric power to be supplied to the load, and for a second period (of eight hours), during which electric power is supplied to the electrolyzer to generate hydrogen.

US6660417 further suggests conveying, during the first period, the water heated up by flowing through the cooling circuit of the fuel cell to a storage tank. During the second period, US6660417 suggests to then convey the heated water collected in the storage tank to the electrolyzer.

More particularly, in a first embodiment, the heated water is used to yield heat to the electrolyzer. In a second embodiment, the heated water is instead directly supplied to the electrolyzer and subjected to the electrolysis process.

However, the solution of US6660417 has some drawbacks.

Firstly, it should be noted that the water volume needed to remove the excess heat developed in the fuel cell during the first period is generally very high and that, consequently, a very large tank is needed to store it, to the detriment of the overall compactness of the system. For example, for disposing an excess heat of the order of 1 kW for 3 h, assuming that water is taken from 25 to 55°C, a volume of about 86 L of water would be required. The system should thus comprise a storage tank adapted to contain a water volume of at least about 90-100 L.

This aspect is particularly, undesirable, especially for back-up applications in which the fuel cell generator is an electric power source alternative to the main power source (e.g. the electric mains) and, since it is activated under emergency conditions only, it is preferably an auxiliary component which may be conveniently arranged within spaces intended for other activities (production, storage, etc.).

Furthermore, the design size of the tank is directly dependent on the specific duration of the respective on/off periods of the fuel cell generator and of the electrolyzer. Therefore, such a system is not very suitable for back-up applications, in which the duration of the respective on/off periods of both generator and electrolyzer may not be univocally estimated in advance, and the number of the generator interventions - and thus of the on/off periods - in one day is not intrinsically predictable. The design volume of the tank could in fact not be suited to the actual operating conditions.

Furthermore, it is worth noting that, as suggested by US6660417, during the operation of the fuel cell, a considerable amount of heat is accumulated in the system, which heat is not substantially dissipated or yielded until the next period of activation of the electrolyzer. This circumstance is particularly undesirable for compact systems which, in addition to the power generator, comprise further components which need to be continuously cooled (e.g. electronic components of the control system, etc.). As a matter of fact, the presence of such a large amount of heat stored in the system makes the effective dissipation of other locally produced heat flows particularly difficult.

Finally, it is worth considering that the electrolysis process is theoretically endothermic if conducted under conditions of reversibility. In particular, the need to supply heat to the electrolyzer is concrete and significant during the relative start-up phase. However, because of the usually high degree of irreversibility of the real process - in turn subject to polarization phenomena - in practice, a circumstance generally occurs wherein the electrolyzer should continuously yield heat to the environment in order to be maintained at the required full-capacity operating temperature. The configuration suggested by US6660417 would instead impose to transfer heat to the electrolyzer during the whole duration of the corresponding working period.

### DISCLOSURE OF INVENTION

It is thus the object of the present invention to provide an fuel cell electric power generator of the type comprising on-site means for generating gaseous fuel, which makes it possible to simply and cost-effectively overcome the drawbacks associated with the known solutions.

In particular, it is the object of the present invention to provide afuel cell electric power generator of the type comprising on-site means for generating gas fuel, in particular for back-up applications, which is capable of meeting the energy and management requirements of the aforesaid system, while ensuring the possibility of limiting the overall size of the system and wisely managing the involved heat flows, both during the start-up phase of the various apparatus and during the corresponding full-capacity operating phase. These phases are indeed characterized by reciprocally different process conditions and needs due to their nature.

The aforesaid object is achieved by the present invention, as it relates to afuel cell electric power generator as defined in claim 1.

### BRIEF DESCRIPTION OF THE DRAWINGS

For a better understanding of the present invention, a preferred embodiment will now be described below only by way of non-limitative examples, and with reference to the accompanying drawings, in which:
- figure 1 diagrammatically shows afuel cell electric power generator according to the prior art; and
- figure 2 diagrammatically shows afuel cell electric power generator according to the invention.

### BEST MODE FOR CARRYING OUT THE INVENTION

In figure 2, numeral 1 indicates as a whole a fuel cell electric power generator according to the invention.

Generator 1 comprises a plurality of fuel cells stacked to form a stack 5 fluidically connected to tanks 3,4 from which it receives, in use, respective flows of gas fuel and oxidizing gas, either pure or in gaseous mixture, to produce electric power to be supplied to a load 6.

Generator 1 futher comprises on-site means 2 for gneerating the gas fuel to be supplied to stack 5.

In the illustrated case, the means 2 for generating gas fuel comprise an electrolyzer configured to receive electric power and water and to convert the latter into its two components, hydrogen and oxygen, which are stored in respective tanks 3,4. Generator 1 thus uses hydrogen as a gas fuel and oxygen as an oxidizing gas.

Generator 1 advantageously comprises a hydraulic circuit 7 for cooling stack 5, within which a thermal carrier fluid, e.g. water, is circulated in order to remove at least part of the heat locally developed by the oxidation reaction from stack 5.

Moreover, generator 1 comprises a hydraulic circuit 8 for heating electrolyzer 2, within which a thermal carrier fluid, e.g. water, is circulated to supply to electrolyzer 2 at least part of the heat needed to maintain the temperature thereof within the optimal operating range. For this purpose, generator 1 further advantageously comprises a heat exchanger 9 at which the hydraulic circuits 7, 8 are hydraulically coupled and, therefore, the thermal integration is obtained between stack 5 and electrolyzer 2. In other words, at least part of the excess heat developed within stack 5 by the oxidation reaction is removed and conveniently transferred to electrolyzer 2.

More particularly, if power generator 1 is a generator devised for back-up applications, i.e. it is activated for meeting the power requirements of load 6 in event of an emergency situation, e.g. a blackout, if the emergency situation is relatively short (e.g. of the order of 10 min), the heat amount exchanged by the heat exchanger 9 between hydraulic circuits 7 and 8, also by virtue of the significant thermal capacity of the thermal carrier fluid (water), is substantially sufficient to dispose of the excess heat developed within stack 5 by the oxidation reaction, i.e. to maintain stack 5 within the optimal operating temperature range. Said removed heat is conveniently transferred to electrolyzer 2, which is thus advantageously maintained within the respective optimal operating temperature range.

Moreover, generator 1 preferably comprises means 10 for dissipation of the heat produced by the oxidation reaction taking place within stack 5, which comprise one or more appropriately arranged fans V1, V2, for example.

In particular, the second dissipation means 10 are activated when the emergency situation, i.e. the period of activity of generator 1, extends over a relatively long time (e.g. a blackout longer than 10 min), so that the excess heat developed within stack 5 by the oxidation reaction is partially dissipated and partially transferred to hydraulic circuit 8, and thus to electrolyzer 2, which is advantageously maintained within the respective optimal operating temperature range.

Generator 1 preferably comprises a control unit (not shown) programmed to manage the hydraulic circuits 7 and 8, and the heat exchanger 9 so as to maintain the electrolyzer within the optimal operating temperature range. In particular, the control unit is connected to means for detecting and transmitting a temperature value in stack 5 and electrolyzer 2, and to respective cut-off means of the thermal carrier fluid flows in the hydraulic circuits 7 and 8.

More particularly, the control unit is programmed to adjust the thermal carrier fluid flows in the hydraulic circuits 7, 8, and therefore the efficiency and amount of heat exchange in the heat exchanger 9 as well, so as to effectively transfer heat from stack 5 to electrolyzer 2 and to maintain the temperature of both within the respective optimal operating temperature ranges.

Furthermore, the control unit is connected to dissipation means 10, which the control unit activates when it detects that the temperature of stack 5 exceeds a predetermined threshold value. Given the involved heat flows, this event generally occurs when the operating period of generator 1, i.e. of stack 5 to produce electric power to be supplied to load 6, is longer than ten minutes (extended blackout).

In use, when generator 1 is activated to supply an electric load, respective flows of hydrogen and oxygen are sent to stack 5 from tanks 3,4. The oxidation reaction which occurs in stack 5 develops heat, which is at least partially removed by a flow of thermal carrier fluid circulating within hydraulic circuit 7. At the heat exchanger 9, said heat is yielded to a thermal carrier fluid flow circulating within hydraulic circuit 8, and, in cascade, to electrolyzer 2, which is thus maintained at a temperature within the optimal temperature range for its operation.

In case of a relatively short activity period of generator 1 (i.e. of stack 5) in producing electric power (e.g. of the order of 10 min), the amount of the heat exchange carried out by the heat exchanger 9 between the hydraulic circuits 7 and 8, also by virtue of the significant thermal capacity of the thermal carrier fluid (water), is substantially sufficient *per* se to dispose of the excess heat developed within stack 5 by the oxidation reaction, thus maintaining stack 5 within the optimal operating temperature range. Such a removed heat is conveniently transferred to electrolyzer 2, which is thus advantageously maintained within the respective optimal operating temperature range.

In case of extended activity of generator 1 (of stack 5) to produce electric power, second dissipation means 10 are also activated so that the excess heat developed within stack 5 by the oxidation reaction is partially dissipated and partially transferred to hydraulic circuit 8, and thus to electrolyzer 2. Thereby, both stack 5 and electrolyzer 2 are advantageously maintained within respective optimal operating temperature ranges.

When generator 1 is set to stand-by, e.g. once the blackout which determined its activation to supply the electric load has been finished, electrolyzer 2 is thus at the ideal temperature to be activated to produce hydrogen and oxygen from water, so as to restore the contents of tanks 3,4 in view of the subsequent intervention of generator 1.

Thereby, thermal integration and efficiency of generator 1 is greatly improved. In particular, the amount of thermal power developed in stack 5 by the oxidation reaction is no longer dissipated, unless partially when the activity period of generator 1 extends beyond a threshold time (e.g. of the order of 10 min), but is advantageously recovered to be used within the generator 2 itself, and more particularly transferred to electrolyzer 2.

Accordingly, the most efficient thermal integration of the system is combined to the advantage of maintaining the electrolyzer 2 within the optimal operating temperature range.

At the end of the emergency situation, i.e. when the activity of stack 5 is interrupted whereas electrolyzer 2 is started to restore the contents in tank 3,4, electrolyzer 2 will immediately operate under conditions which correspond to maximum efficiency and output, thus eliminating the low efficiency transient associated with the above-described traditional configuration.

The overall efficiency of the whole generation/consumption process of the reactants is advantageously increased because, by increasing the degree of thermal integration, energy wastes are reduced and because operation under maximum efficiency conditions of the most delicate components of generator 1 is promoted.

Furthermore, at least when the activity period of the generator does not extend beyond a given threshold time, dissipation means 10 no longer need to be activated since the amount of the heat exchange carried out at the heat exchanger 9 is sufficient to dispose of the excess heat developed within stack 5, thus obtaining an important reduction of consumptions related to the auxiliary components of generator 1, and at the same time a considerable reduction of noise and wear of the components themselves.

Advantageously, temperature control is more effective and accurate because the temperature of stack 5 is controlled by removing heat by means of a thermal carrier fluid, in particular when a thermal carrier fluid with a high thermal inertia, such as water, is used.

Furthermore, the overall size and volume of generator 1 may be easily limited, while ensuring a satisfactory management of heat exchanges in the process, because the thermal coupling between stack 5 and electrolyzer 2 is carried out by means of two different circuits 7 and 8, and without interposing a thermal carrier fluid storage tank.

The possibility of limiting the overall size of generator 1 ensured by the invention is also advantageous in prospect of further integrating, within a single system, generator 1 with other possible auxiliary components, as more space is made available for their introduction. Moreover, if the auxiliary components are to be cooled as well, the thermal integration ensured by generator 1 according to the invention may also be advantageous from the point of view of an integrated management of the overall heat dissipation.

It is finally apparent that changes and variations may be made to the system described and illustrated herein, without departing from the scope of protection of the appended claims.

## Claims

1. An electric power generator (1) comprising a plurality of fuel cells stacked in a stack (5) and configured to supply an electric load (6), the generator (1) comprising means (2) for generating a gas fuel to be supplied to the stack (5), and means (7, 10) for removing at least part of a heat flow generated in the stack (5) as a consequence of the consumption of said gas fuel; the generator (1) comprising heating means (8, 9) configured to maintain said means (2) for generating gas fuel in a predetermined temperature range and comprising means (9) for transferring at least part of said removed part of the heat flow generated in the stack (5) from said removing means (7) to said means (2) for generating gas fuel; **characterized in that** said means (7) for removing at least part of said heat flow generated in the stack (5) comprise a first hydraulic circuit thermally coupled to the stack (5) through which a flow of a first thermal carrier fluid passes and **in that** said heating means (8,9) comprise a second hydraulic circuit (8) thermally coupled to the means (2) for generating gas fuel and through which a flow of a second thermal carrier fluid passes.

2. The generator according to claim 1, wherein the means (9) for transferring at least part of said removed part of the heat flow generated in the stack (5) comprise a heat exchanger.

3. The generator according to claim 1 or 2, wherein the gas fuel is hydrogen and the means (2) for generating gas fuel comprise an electrolyzer configured to receive water and electric power and generate hydrogen and oxygen.

4. The generator according to any of claims 1 to 3, wherein the means (7, 10) for removing at least part of a heat flow generated in the stack (5) comprise thermal dissipation means (10).

5. The generator according to any of claims 1 to 4, comprising a control unit programmed to manage the removing means (7, 10) and the heating means (8, 9) so as to maintain the means (2) for generating gas fuel within said predetermined temperature range.

6. A method for managing an electric power generator having fuel cells stacked in a stack (5) and configured to supply an electric load (6), the generator comprising means (2) for generating a gas fuel to be supplied to the stack (5), and means (7, 10) for removing at least part of a heat flow generated in the stack (5) as a consequence of the consumption of said gas fuel; the method comprising the steps of:
a) supplying the stack (5) with a flow of gas fuel to generate the electric power required by the electric load (6);
b) removing at least part of the heat flow generated by the stack (5) as a consequence of the consumption of said gas fuel by means of a first flow of thermal carrier fluid;
c) by means of a second flow of thermal carrier fluid, transferring at least part of said removed part of heat flow generated in the stack (5) to said means (2) for generating gas fuel, so as to maintain the same within a predetermined temperature range, said first and second flows of thermal carrier fluid being thermally coupled and materially separate.

7. The method according to claim 6, comprising the step of generating said gas fuel by means of an electrolytic process carried out in said means (2), wherein said predetermined temperature range is from 40 to 80°C.

8. The method according to any of claims 6 or 7, comprising the step of maintaining said stack (5) at a temperature from 40 to 80°C.

## Patentansprüche

1. Ein elektrischer Stromgenerator (1), der eine Vielzahl von Brennstoffzellen in einem Stapel (5) umfasst und darauf ausgelegt ist, eine elektrische Last (6) zu liefern, wobei der Generator (1) Elemente (2) zum Erzeugen eines an den Stapel (5) zu liefernden Gaskraftstoffs umfasst und Elemente (7, 10) zum Abführen von wenigstens einem Teil des im Stapel (5) als Folge des Verbrauchs des genannten Gaskraftstoffs erzeugten Wärmeflusses; wobei der Generator (1) Heizelemente (8, 9) umfasst, die darauf ausgelegt sind, die genannten Elemente (2) zum Erzeugen des Gaskraftstoffs in einem vorbestimmten Temperaturbereich zu halten und Elemente (9) zum Übertragen von wenigstens einem Teil des genannten abgeführten Teils des im Stapel (5) erzeugten Wärmeflusses von den genannten abführenden Elementen (7) an die genannten Elemente (2) zum Erzeugen des Gaskraftstoff; **dadurch gekennzeichnet, dass** die genannten Elemente (7) zum Abführen wenigstens eines Teils des genannten, im Stapel (5) erzeugten Wärmeflusses einen ersten Hydraulikkreis umfassen, der thermisch mit dem Stapel (5) gekoppelt ist, durch den ein Fluss eines ersten Wärmeträgermediums strömt und **in dem** die genannten Heizelemente (8, 9) einen zweiten Hydraulikkreis (8) umfassen, der thermisch mit den Elementen (2) zum Erzeugen des Gaskraftstoffs gekoppelt ist und durch den ein Fluss eines zweiten Wärmeträgermediums strömt.

2. Generator nach Anspruch 1, bei dem die Elemente (9) zum Übertragen wenigstens eines Teils des genannten abgeführten Teils des im Stapel (5) erzeugten Wärmeflusses einen Wärmetauscher umfassen.

3. Generator nach Anspruch 1 oder 2, bei dem der Gaskraftstoff Wasserstoff ist und die Elemente (2) zum Erzeugen des Gaskraftstoffs ein Elektrolysegerät umfassen, das darauf ausgelegt ist, Wasser und Strom zu erhalten und Wasserstoff und Sauerstoff zu erzeugen.

4. Generator nach einem beliebigen der Ansprüche 1 bis 3, bei dem die Elemente (7, 10) zum Abführen von wenigstens einem Teil eines im Stapel (5) erzeugten Wärmeflusses Elemente zur Wärmeableitung (10) umfassen.

5. Generator nach einem beliebigen der Ansprüche 1 bis 4, der eine Steuereinheit umfasst, die darauf programmiert ist, die abführenden Elemente (7, 10) und die Heizelemente (8, 9) zu verwalten, um die Elemente (2) zum Erzeugen des Gaskraftstoffs innerhalb des genannten vorbestimmten Temperaturbereichs zu halten.

6. Verwaltungsverfahren für einen Stromgenerator mit in einem Stapel (5) enthaltenen Brennstoffzellen, der darauf ausgelegt ist, eine elektrische Last (6) zu liefern, wobei der Generator Elemente (2) zum Erzeugen eines an den Stapel (5) zu liefernden Gaskraftstoffs umfasst und Elemente (7, 10) zum Abführen von wenigstens einem Teil eines im Stapel (5) als Folge des Verbrauchs des genannten Gaskraftstoffs erzeugten Wärmeflusses; wobei das Verfahren die folgenden Schritte umfasst:
a) Versorgung des Stapels (5) mit einem Gaskraftstofffluss, um den von der elektrischen Last (6) geforderten Strom zu erzeugen;
b) Abführen von wenigstens einem Teil des vom Stapel (5) als Folge des Verbrauchs des genannten Gaskraftstoffs erzeugten Wärmeflusses mittels eines ersten Flusses eines Wärmeträgermediums;
c) Übertragung mittels eines zweiten Flusses eines Wärmeträgermediums wenigstens eines Teil des genannten abgeführten Teils des im Stapel (5) erzeugten Wärmeflusses an die genannten Elemente (2) zum Erzeugen von Gaskraftstoff, um diesen innerhalb eines vorbestimmten Temperaturbereichs zu halten, wobei der genannte erste und zweite Fluss des genannten Wärmeträgermediums thermisch gekoppelt und materiell getrennt sind.

7. Verfahren nach Anspruch 6, das den Schritt des Erzeugens des genannten Gaskraftstoffs mittels eines elektrolytischen Prozesses umfasst, der in den genannten Elementen (2) stattfindet, wobei der genannte vorbestimmte Temperaturbereich zwischen 40 und 80°C liegt.

8. Verfahren nach einem beliebigen der Ansprüche 6 oder 7, das den Schritt des Erhaltens des genannten Stapels (5) bei einer Temperatur von 40 bis 80°C umfasst.

## Revendications

1. Générateur d'énergie électrique (1) comprenant plusieurs piles à combustibles empilées dans un assemblage (5) et configuré de sorte à fournir une charge électrique (6), ledit générateur (1) comprenant un moyen (2) de génération d'un gaz combustible destiné à l'assemblage (5) et des moyens (7, 10) chargés d'éliminer au moins une partie d'un flux thermique généré dans l'assemblage (5) et résultant de la consommation dudit gaz combustible ; le générateur (1) comprenant des moyens de chauffage (8, 9) configurés pour maintenir ledit moyen (2) de génération de gaz combustible dans une fourchette préétablie de température et incluant un moyen (9) de transfert d'au moins une partie de ladite partie éliminée du flux thermique généré dans l'assemblage (5) des moyens d'élimination (7) aux moyens (2) de génération de gaz combustible ; **caractérisé en ce que** lesdits moyens (7) d'élimination d'au moins une partie dudit flux thermique généré dans l'assemblage (5) contient un premier circuit hydraulique thermiquement raccordé à l'assemblage (5) à travers lequel afflue un premier fluide caloporteur et **en ce que** lesdits moyens de chauffage (8, 9) comprennent un deuxième circuit hydraulique (8) thermiquement raccordé au moyen (2) de génération de gaz combustible et à travers lequel afflue un deuxième fluide caloporteur.

2. Générateur selon la revendication 1,dans lequel les moyens (9) de transfert d'au moins une partie de ladite partie éliminée du flux thermique généré dans l'assemblage (5) contient un échangeur thermique.

3. Générateur selon la revendication 1 ou 2, dans lequel le gaz combustible est de l'hydrogène et le moyen (2) de génération de gaz combustible contient un générateur électrolytique configuré pour recevoir de l'eau et de l'énergie électrique et pour produire de l'hydrogène et de l'oxygène.

4. Générateur selon l'une des revendications 1 à 3, dans lequel les moyens (7, 10) d'élimination d'au moins une partie d'un flux thermique généré dans l'assemblage (5) comprend un moyen de dissipation de chaleur (10).

5. Générateur selon l'une des revendications 1 à 4, comprenant une unité de contrôle programmée pour gérer les moyens d'élimination (7, 10) et les moyens de chauffage (8, 9) de sorte à maintenir le moyen (2) de génération de gaz combustible dans une fourchette préétablie de température.

6. Procédé de gestion d'un générateur d'énergie électrique constitué de piles à combustibles empilées dans un assemblage (5) et configuré de sorte à fournir une charge électrique (6), ledit générateur comprenant un moyen (2) de génération d'un gaz combustible destiné à l'assemblage (5) et des moyens (7, 10) pour éliminer au moins une partie d'un flux thermique généré dans l'assemblage (5) et résultant de la consommation dudit gaz combustible ; le procédé comportant les étapes suivantes :
a) alimenter l'assemblage (5) par un flux de gaz combustible afin de générer l'énergie électrique requise par la charge électrique (6) ;
b) éliminer au moins une partie du flux thermique généré par l'assemblage (5) et résultant de la consommation dudit gaz combustible au moyen d'un premier flux de fluide caloporteur ;
c) au moyen d'un deuxième flux de fluide caloporteur, transférer au moins une partie de ladite partie éliminée du flux thermique généré dans l'assemblage (5) vers ledit moyen (2) de génération de gaz combustible, de sorte à maintenir ce dernier dans une fourchette préétablie de température, lesdits premier et deuxième flux de fluide caloporteur étant thermiquement raccordés et matériellement séparés.

7. Procédé selon la revendication 6, comprenant une étape de génération dudit gaz combustible au moyen d'un processus électrolytique exécuté dans ledit moyen (2), dans lequel ladite fourchette préétablie de température va de 40 à 80°C.

8. Procédé selon l'une des revendications 6 ou 7, comprenant une étape pour maintenir ledit assemblage (5) à une température située entre 40 et 80°C.
